# EUROPEAN PATENT SPECIFICATION

(11) **EP 0 447 747 B1**
(45) Date of publication and mention of the grant of the patent: **12.04.1995**
(21) Application number: 91100362.2
(22) Date of filing: 14.01.1991
(51) Int. Cl.: G01N 21/35, G01J 3/30

(54) **Apparatus and method for injecting compounds in plasma for ICP-OES analysis**
Verfahren und Vorrichtung zum Einspritzen von Komponenten in Plasma zur "ICP-OES"-Analyse
Procédé et dispositif pour l'injection de composés dans le plasma pour l'analyse au moyen de "ICP-OES"

(30) Priority: 27.02.1990 US 485409
(43) Date of publication of application: 25.09.1991
(73) Proprietor: CYTEC TECHNOLOGY CORP., Wilmington, Delaware 19801 (US)
(72) Inventor: Popielski, Stanley E., East Lyme, Connecticut 06333 (US); Holdsworth, Melvyn, Fairfield, Connecticut 06430 (US)
(74) Representative: Diehl, Hermann O. Th., Dr.

(56) References cited:
- AU-D- 4 079 278
- DE-A- 3 026 155
- US-A- 3 824 016
- US-A- 4 259 573
- US-A- 4 300 393
- US-A- 4 334 882
- US-A- 4 688 935

## Description

The invention relates to improvements in inductively coupled argon plasma optical emission spectrometry (ICAP-OES) and more particularly to improvements in the analysis of electronic grade organometallic compounds for the detection of trace metal impurities by ICAP-OES.

Detection of minuscule quantities of impurities in electronic grade orgamometallic compounds is important for quality control in the manufacture of such compounds for use in semiconductor manufacture. ICAP-OES has been an especially useful analytical tool for this use. This spectrometer is capable of detecting and measuring quantities of many metal impurities in the product at less than one part per million concentration. An argon stream carrying a vaporized sample of the compound to be tested is introduced at the base of an inductively coupled argon plasma in the spectrometer. A vapor or aerosol of a liquid sample is carried by a continuous stream of argon into the plasma where the sample is decomposed and metal atoms in the sample emit radiation having characteristic wave lengths and intensities which can be detected and measured by the spectrometer. Use of ICAP-OES is a known analytical technique. DE-A1-3 026 155 discloses an excitation source for spectroscopic purposes in which the liquid containing the sample is vaporised by microwave absorption in a chamber in which said liquid is mixed with the carrier gas and combustion gas before being ignitted in the flame of the borner.

The invention provides new means and method for introducing into the plasma a vaporized sample of a liquid composition to be analyzed. The invention further provides means for introducing to the plasma a vapor of a metal-containing impurity in a measured quantity mixed with the vapor of the sample compound, also in a measured quantity for the purpose of spectrometer calibration.

In prior art, one method that was used for introduction of sample solutions into the ICAP-OES was based on the injection of a liquid aerosol generated by a pneumatic nebulizer. The sample was hydrolyzed to make an aqueous solution which was then analyzed. Another method, having some advantage over the aerosol method, was exponential dilution, wherein a sample of the compound to be tested was vaporized in a flask filled with argon and the vapor in argon was then displaced from the flask and directed to the plasma by flowing argon into the flask. A review of several prior art methods and discussion of some of their disadvantages can be found in U.S. Patent No. 4,688,935.

According to the invention, an undiluted sample of a liquid compound to be tested is injected directly into a heated stream of argon. The injected liquid sample is rapidly vaporized and the vapor-bearing argon stream flows continuously to the base of the plasma and thence directly into the plasma. The liquid sample is injected into the argon stream which is flowing through a tube with means to provide heat for rapid evaporation of the liquid sample. Before the argon reaches the injection point, it has been heated to a temperature sufficient to carry the vaporized sample. The liquid sample is rapidly vaporized as the sample is injected into the argon stream before it reaches the plasma, by heat from the argon and from surrounding walls of the tube.

The invention can be used in the analysis by ICAP-OES of volatile organometallic liquids to determine their metal content. It is especially useful for detection of trace metal contaminants in liquid organometallic products such as trimethylgallium and trimethylaluminum, for example. Metals which can be detected and measured by ICAP-OES include Al, Si, Ge, Zn, Sn, Hg, Pb, Fe, Mn, Ni, Sb, and Te. The invention enables the analyst to detect and measure impurities in a test sample to detection limits which are much lower than before, because the invention can maintain higher rates of feed of test sample to the plasma than could be done by prior art methods.

The invention will be described in more detail by reference to specific examples and to the drawings. A Thermo Jarrell Ash ICAP-61 inductively coupled argon plasma optical emission spectrometer, (ICAP-OES) is used for the analysis. The ICAP-61 is a direct reading atomic emission system using an inductively coupled radio-frequency plasma as the emission source. The principles and theory of operation for general use of the ICAP-61 are known and will not be described here. In the ICAP-61 emission system, a purged optical path transfer tube physically separates the sampling and measurement systems. The measurement system measures only light emitted from material in the plasma. The invention is concerned only with the sampling to the plasma system and so the known measuring system will not be described in more detail.

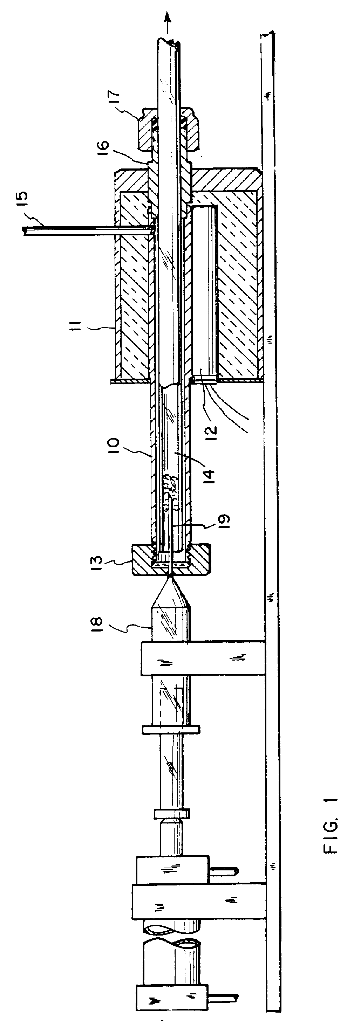

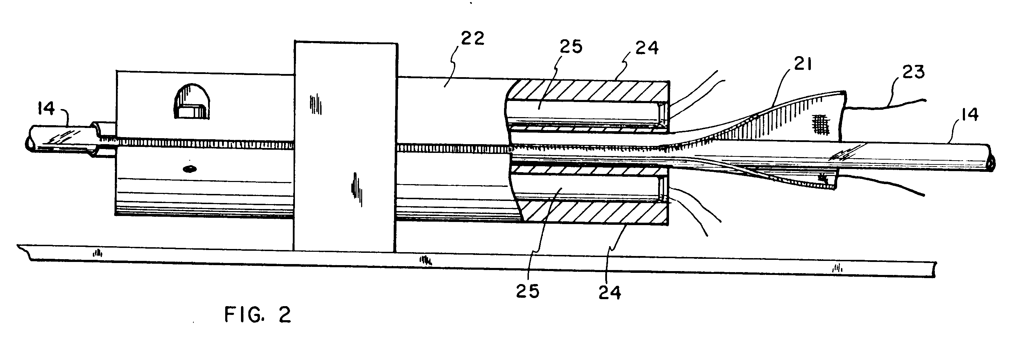

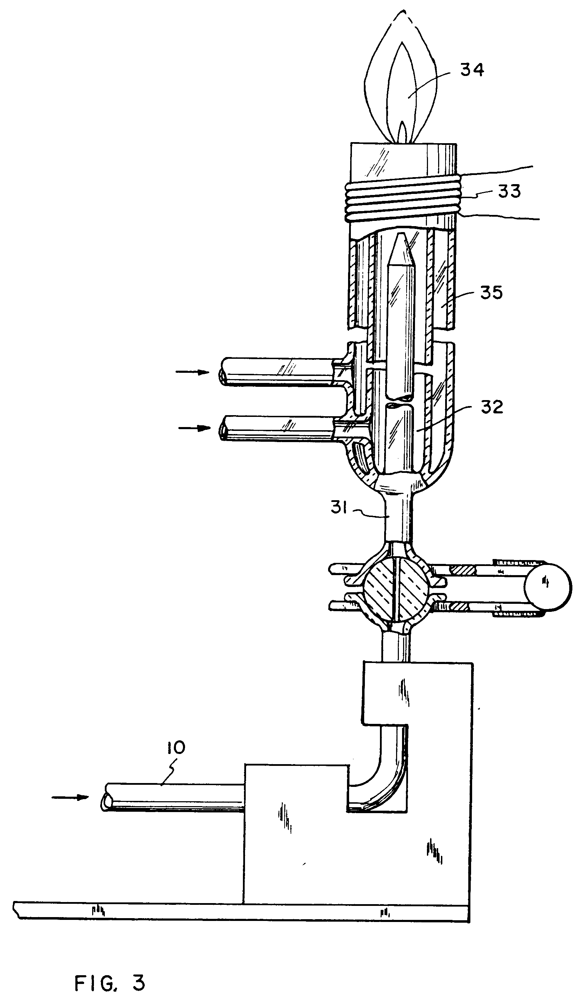

In the drawings, Fig 1. is a schematic drawing of apparatus for heating an argon stream and for injection and vaporization of a sample into the argon stream. In this apparatus the sample feed stream is prepared for introduction to the plasma. Fig 2 illustrates a tube heater by which temperature of the sample feed stream is maintained in transit from the heating and sample injection apparatus shown in Fig 1. to the plasma torch. Fig 3. is a schematic diagram of a plasma torch to illustrate the flow of sample feed into the torch.

Referring now to Fig 1., the argon heating and sample injection apparatus comprises a heating tube 10 which extends through a heating block 11 which is heated by an electric resistance heating rod 12. The heating tube extends outward from the block and is closed at its outer end by a septum cap 13. Inside the heating tube 10 a sample feed tube 14 extends from its open end just short of the septum, concentrically through the length of the heating tube inside the heating block. The sample feed tube then continues from the heating block to the plasma torch. The outside diameter of the sample feed tube is smaller than the inside diameter of the heating tube, providing an annular path between the two tube walls for passage of argon. Near the end of the heating tube which is inside the block, an argon supply tube 15 is connected into the heating tube and leads out of the heating block to an argon supply. The end of the heating tube inside the heating block connects to an annular fitting 16 which seals the inner end of the heating tube and leads through the wall of the block to the outside. The sample feed tube 14 extends from inside the heating tube through the center of the annular fitting 16 and through a sealing ring and gasket 17 which holds the feed tube in place and seals the end of the annular passage between the tubes. Argon flows from the supply tube through the annular passage towards the septum end of the heating tube.

Inside the septum end of the heating tube a small space is provided between the septum cap 13 and the end of the feed tube 14 to allow passage of argon from the annular passage through the small space and into the open end of the feed tube. A syringe 18 containing the liquid sample to be tested, has an injection needle 19 which extends from the syringe which is outside the tubes carrying the argon stream, through the septum cap and into the open end of the feed tube, to a point inside the feed tube and down stream from the heating tube. At the end of the needle, inside the feed tube, a small loose bundle of polytetuafluorethylene wool or metal fibers or wires is provided to dissipate liquid away from the needle end where the injected liquid might otherwise accumulate as droplets.

In the argon heating and sample injection apparatus described, the liquid sample to be analyzed is vaporized into the argon carrier gas in preparation for introduction to the plasma. An electric resistance heater in the heating block supplies heat to the heating tube and is regulated to maintain temperature of the heating tube wall at a selected temperature. A stream of argon gas is fed through the argon supply tube and into the annular passage between the heating tube and the sample feed tube. The argon is heated by contact with the hot tube walls as the gas flows through the annular passage. From the end of the annular passage, heated argon flows into the open end of the sample feed tube through which it continues its flow. A liquid sample in the syringe is introduced continuously at a regular rate through the injection needle into the heated argon stream which is flowing continuously through the sample feed tube. The injected liquid sample is rapidly heated and vaporized in the sample feed tube by heat from the hot argon gas stream and from the tube walls. The hot argon stream then carries the sample vapor through the feed tube and to the plasma torch for analysis.

The sample feed tube continues from the heating and injection apparatus to the plasma torch. The length of the feed tube down stream from the injection point, and particularly between the heating block and the plasma, may be heated when necessary to maintain the temperature of the vapor-bearing gas to avoid condensation of the vapor.

Referring now to Fig 2., the section of the sample feed tube 14 which extends from the heating block shown in Fig 1 to the plasma torch shown in Fig 3, is wrapped in an electric resistance heated flexible ribbon 21 and the wrapped tube is encased in an electric resistance heated cylinder 22. The ribbon 21 is heated by an electric power source not shown, connected to wire leads 23 which lead to resistance heating means in the ribbon. The heated cylinder 22 comprises two metal hemicylinders 24, each heated by an electric resistance rod 25 inside each of the hemicylinders. The two hemicylinders are fitted around the ribbon and clamped together to enclose the feed tube. By thermostatic control means not shown, electric power to resistance heaters in the ribbon and cylinder is regulated to maintain a selected temperature in the feed tube.

The sample feed tube continues to a plasma torch shown in Fig 3. A ball joint comprises a glass ball fitted tight between flared ends of the feed tube 14 and the sample feed passage 31 in the plasma torch. Heated argon gas carrying the sample vapor flows through a passage in the glass ball from the feed tube 14 into the sample feed passage 31 which leads through the torch to the plasma. In addition to the sample feed passage to the plasma, the torch comprises a separate plasma gas passage 32 for supply of argon plasma gas which is heated in the torch by a radio frequency induction generator (RF coil) 33 to create the high temperature plasma 34 in which sample components are decomposed and metal atoms emit characteristic radiation which is detected and measured by the analyzer. The torch has still another argon passage 35 through which an auxiliary argon gas stream is directed to form an envelope of cooler gas surrounding the plasma.

Operation of the apparatus described, to analyze for trace elements in a liquid product, will be described with reference to analysis of trimethylgallium (TMG) and trimethyl aluminum (TMA) products. Those are liquid compounds which must be protected from air and water and, for their intended use in manufacture of electronic components, the compounds produced must be extremely pure. The invention is particularly advantageous for analysis of these liquid materials because air and water can be entirely excluded and the sample can be injected at relatively high concentration in the gas feed to the plasma. The higher concentration of test material in the sample feed to the plasma permits analysis for metal impurities to detection limits which are substantially less than the lowest detection limits attained by prior art methods.

To calibrate the ICAP-61 analyzer for analysis it is preferred to use standard solutions of the compound to be tested, e.g. trimethyl gallium or trimethyl aluminum, containing known quantities of impurities. When a liquid compound of the metal impurity is volatile and is compatible with the liquid compound to be tested, one may simply mix the liquids to make standard solutions of known composition for analysis.

For example, to calibrate the analyzer for detection and measurement of Si, Ge and Sn in trimethylgallium, a standard solution is prepared with measured quantities of tetraethylsilicon, tetramethylgermanium and tetramethyltin in trimethylgallium.

### EXAMPLE 1

The apparatus described above and illustrated in the drawings is assembled. The sample feed tube and the argon pathway in the heating block are thoroughly cleaned and the sample feed tube is connected to the torch of the ICAP-61 analyzer at the ball joint. The heating elements are powered with electricity and regulated to maintain line temperature at 93°C. The plasma is ignited and operated with 1.50 Kw power to the RF coil, flowing 18 liters per minute of argon to the plasma gas stream, 1.1 liter per minute to the auxiliary gas stream and 0.65 liter per minute of argon to the sample gas stream. The torch is operated at these rates for at least 30 minutes to attain steady operation whereupon the analyzer is profiled and the vertical torch position is optimized by known procedures. A standard solution has been prepared of tetraethylsilicon, tetramethylgermanium and tetramethyltin in trimethylgallium. This solution has been made up to contain 13 micrograms/ml Ge, 16 micrograms/ml Sn and 11 micrograms/ml Si.

To calibrate the spectrometer, first a sample of pure liquid trimethylgallium is put into the syringe and injected at a rate of 0.1 ml/min per minute into the sample feed tube. The continuous stream of heated argon in the sample feed tube evaporates the trimethyl gallium sample and carries the vapor to the torch. The radiant emission from the plasma is monitored by the analyzer and the intensity at the characteristic wavelengths for germanium, tin and silicon are measured by the analyzer. A number of intensity measurements at each wavelength are automatically recorded and averaged for each wavelength. The sample feed tube is then purged and a new syringe containing the standard solution described above is used to inject the standard solution into the sample feed tube as before. Again the intensity at the wavelength for each metal is measured several times and averaged. The known metal content of each sample and the average intensities at wavelengths for each metal as measured for each of the two samples, are used to plot an intensity vs. concentration calibration curve for each metal.

When a test sample of trimethyl gallium is injected and analyzed by the same procedure, the intensity measured at each of the wave lengths for silicon, germanium and tin is compared with the calibration curve for each metal to determine the amount of each metal detected as impurities in the sample being tested.

For calibration and use of the analyzer to measure impurities in trimethylaluminum, sample solutions are prepared and used in the same manner except using trimethylaluminum instead of trimethylgallium, and the heating is adjusted to maintain line temperature in the sample feed tube at higher temperature, about 212°C, for analysis of trimethylaluminum. The analyzer may be calibrated in the same manner to analyze for other metals, using solutions of liquid compounds of such other metals in trimethylgallium or timethylaluminum for the calibration.

When compounds used for the calibration are incompatible in a single liquid solution, the compounds can be injected and vaporized separately into the argon stream, each in a separate heater of the kind described and the vapors are then carried together in the stream to the torch. For example, two heaters of the kind described above are connected in series with the argon stream from the first heater leading directly to the argon stream inlet of the second heater. A measured quantity of a liquid compound of an impurity metal is injected at a steady rate and vaporized in argon at the first heater and the vapor is carried by the argon stream into the second heater where a measured quantity of the second liquid is injected at steady rate and vaporized into the same argon stream which then carries both vapors to the torch.

In this manner, compounds such as dimethyl selenide, t-butylarsine, dimethylcadmium, or diethylsulfide, for example, can be vaporized in argon at the first heater and carried in the argon stream through the second heater where trimethylgallium or trimethylaluminum is vaporized and the stream proceeds to the plasma torch.

In calibration and analysis by ICAP-OES using the sample feed apparatus and methods described, the rate of delivery of gallium to the plasma, at a direct injection rate of 0.1 ml trimethylgallium per minute, amounts to about 1100 micrograms Ga per second. By comparison, a typical delivery rate of gallium to the plasma using a 2% aqueous solution of a gallium compound delivered by a nebulizer, amounts to about eight micrograms Ga per second. A typical delivery rate for feed of trimethyl gallium by the exponential dilution method amounts to about one microgram Ga per second. Because the delivery rates of organometalic compounds to the plasma can be greater by several orders of magnitude by the method of the invention, the limits of detection for metal impurities in the compounds can be reduced typically to less than one microgram per milliliter and, for most metals, in the range from 0.05 to 0.3 micrograms per milliliter.

The apparatus and method of this invention can be used for analyzing other organometallic products for metal impurities, events in very small concentrations. For example, monotertiary butyl arsine product may be analyzed for the presence of silicon, phosphorus and other metal impurities to limits less than one part per million. Other products that can be analyzed, for example, include monotertiary butyl phosphine, diisopropyltelluride, dimethyl cadmium, dimethyl zinc, and the like.

## Claims

1. A method of analysis of a volatile liquid organometallic compound by means of an inductively coupled argon plasma optical emission spectrometer to detect and measure metal impurities in said compound, comprising:
a) flowing an argon stream continuously to an inductively coupled argon plasma in the spectrometer,
b) heating said argon stream before it reaches the plasma, to a temperature sufficient to carry in the stream a vaporized sample of the organometallic compound to be analyzed,
c) injecting directly into the heated argon stream as the heated argon continues its flow to the plasma, a liquid sample of the compound to be analyzed,
d) vaporizing the injected liquid in the heated flowing argon stream before the stream reaches the plasma, and
e) continuing the flow of the heated argon stream carrying the vaporized sample directly to the plasma for analysis.

2. A method defined by Claim 1 wherein said volatile organometallic liquid compound is trimethyl gallium.

3. A method defined by Claim 1 wherein said volatile organometallic liquid compound is trimethyl aluminum.

4. An inductively coupled argon plasma optical emission spectroscopy apparatus comprising an inductively coupled radio-frequency plasma as the emission source and means for introducing into the plasma a vaporized sample of a volatile liquid composition to be analyzed, said means comprising in combination,
a) means for flowing a continuous stream of argon into said plasma
b) means for heating said stream of argon before said stream reaches the plasma,
c) means for continuously injecting a sample of a volatile liquid into the heated argon stream and
d) means for vaporizing said liquid into the argon stream before said stream reaches the plasma.

5. Apparatus defined by Claim 4 wherein said means for heating the argon stream comprises a heating tube heated by an electrical resistance heater.

6. Apparatus defined by Claim 5 wherein said means for continuously injecting a liquid sample into the heated argon stream comprises a syringe outside the tubes carrying the argon stream and an injection needle leading from the syringe through a septum to an injection point in an argon feed tube downstream from the heating tube.

7. Apparatus defined by Claim 4 further comprising means for heating the argon feed tube downstream from the injection point to maintain the argon stream bearing the vaporized sample at temperature sufficient to avoid condensation of the vapor.

## Patentansprüche

1. Verfahren zur Analyse einer leichtflüchtigen flüssigen metallorganischen Verbindung mittels eines induktiv gekoppelten optischen Argonplasma-Emissionsspektrometers zum Erfassen und Messen von Metallverunreinigungen in der Verbindung, wobei das Verfahren folgende Schritte umfaßt:
a) kontinuierliches Zuführen eines Argonstroms zu einem induktiv gekoppelten Argonplasma in dem Spektrometer;
b) Erwärmen des Argonstroms, bevor dieser das Plasma erreicht, auf eine Temperatur, die ausreicht, in dem Strom eine verdampfte Probe der zu analysierenden metallorganischen Verbindung zu transportieren;
c) Einspritzen einer flüssigen Probe der zu analysierenden Verbindung direkt in den erwärmten Argonstrom, während dieser kontinuierlich zu dem Plasma fließt;
d) Verdampfen der eingespritzten Flüssigkeit im erwärmten, fließenden Argonstrom, bevor der Strom das Plasma erreicht, und
e) Fortsetzen des Flusses des erwärmten Argonstroms, der die verdampfte Probe direkt zum Plasma für die Analyse transportiert.

2. Verfahren nach Anspruch 1, wobei es sich bei der leichtflüchtigen, metallorganischen, flüssigen Verbindung um Trimethylgallium handelt.

3. Verfahren nach Anspruch 1, wobei es sich bei der leichtflüchtigen metallorganischen flüssigen Verbindung um Trimethylaluminium handelt.

4. Induktiv gekoppelte optische Argonplasma-Emissionsspektroskopievorrichtung, die ein induktiv gekoppeltes Hochfrequenzplasma als Emissionsquelle sowie Mittel zum Einführen einer verdampften Probe einer zu analysierenden leichtflüchtigen flüssigen Zusammensetzung in das Plasma aufweist, wobei das Mittel in Kombination folgendes umfaßt:
a) Mittel zum Zuführen eines kontinuierlichen Argonstroms in das Plasma,
b) Mittel zum Erwärmen des Argonstroms, bevor dieser das Plasma erreicht,
c) Mittel zum kontinuierlichen Einspritzen einer Probe einer leichtflüchtigen Flüssigkeit in den erwärmten Argonstrom, und
d) Mittel zum Verdampfen der Flüssigkeit in den Argonstrom, bevor dieser das Plasma erreicht.

5. Vorrichtung nach Anspruch 4, wobei das Mittel zum Erwärmen des Argonstroms eine Heizröhre aufweist, die von einer elektrischen Widerstandsheizeinrichtung erwärmt wird.

6. Vorrichtung nach Anspruch 5, wobei das Mittel zum kontinuierlichen Einspritzen einer flüssigen Probe in den erwärmten Argonstrom eine Spritze außerhalb der den Argonstrom führenden Röhren und eine Injektionsnadel, die von der Spritze durch ein Septum zu einem Injektionspunkt in einer stromabwärts von der Heizröhre angeordneten Argonzufuhrröhre führt, aufweist.

7. Vorrichtung nach Anspruch 4, die ferner Mittel zum Erwärmen der Argonzufuhrröhre stromabwärts von dem Injektionspunkt aufweist, um den die verdampfte Probe mitführenden Argonstrom auf einer Temperatur zu halten, die ausreicht, um das Kondensieren des Dampfes zu verhindern.

## Revendications

1. Procédé d'analyse d'un composé organométallique liquide volatil par un spectromètre d'émission optique dans un plasma d'argon couplé inductivement, pour la détection et la mesure d'impuretés métalliques dans le composé, comprenant :
a) la circulation continue d'un courant d'argon vers un plasma d'argon couplé inductivement dans le spectromètre,
b) le chauffage du courant d'argon avant qu'il n'atteigne le plasma, à une température suffisante pour qu'un échantillon vaporisé du composé organométallique à analyser soit transporté dans le courant,
c) l'injection directe dans le courant d'argon chauffé, lorsque l'argon chauffé continue à circuler vers le plasma, d'un échantillon liquide du composé à analyser,
d) la vaporisation du liquide injecté dans le courant chauffé d'argon qui circule avant que le courant n'atteigne le plasma, et
e) la poursuite de la circulation du courant d'argon chauffé transportant l'échantillon vaporisé directement dans le plasma pour l'analyse.

2. Procédé selon la revendication 1, dans lequel le composé liquide organométallique volatil est le triméthylgallium.

3. Procédé selon la revendication 1, dans lequel le composé liquide organométallique volatil est le triméthylaluminium.

4. Appareil de spectroscopie d'émission optique dans un plasma d'argon couplé inductivement, comprenant un plasma à hautes fréquences, couplé inductivement comme source d'émission et un dispositif d'introduction dans le plasma d'un échantillon vaporisé d'une composition liquide volatile à analyser, le dispositif comprenant en combinaison
a) un dispositif de circulation d'un courant continu d'argon dans le plasma,
b) un dispositif de chauffage du courant d'argon avant que le courant n'atteigne le plasma,
c) un dispositif d'injection continu d'un échantillon d'un liquide volatil dans le courant d'argon chauffé, et
d) un dispositif de vaporisation du liquide dans le courant. d'argon avant que le courant n'atteigne le plasma.

5. Appareil selon la revendication 4, dans lequel le dispositif de chauffage du courant d'argon comporte un tube de chauffage qui est chauffé par un organe de chauffage par résistance électrique.

6. Appareil selon la revendication 5, dans lequel le dispositif d'injection continue d'un échantillon liquide dans le courant d'argon chauffé comporte une seringue placée à l'extérieur des tubes transportant le courant d'argon et une aiguille d'injection partant de la seringue et traversant une cloison vers un point d'injection placé dans le tube d'alimentation en argon en aval du tube de chauffage.

7. Appareil selon la revendication 4, comprenant en outre un dispositif de chauffage du tube d'alimentation en argon en aval du point d'injection afin que le courant d'argon contenant l'échantillon vaporisé soit maintenu à une température qui suffit pour éviter la condensation de la vapeur.
